# EUROPÄISCHE PATENTSCHRIFT

(11) **EP 3 732 404 B1**
(45) Veröffentlichungstag und Bekanntmachung des Hinweises auf die Patenterteilung: **06.10.2021**
(21) Anmeldenummer: 19710307.0
(22) Anmeldetag: 26.02.2019
(51) Int. Cl.: F24F 13/02

(54) **VERFAHREN ZUR HERSTELLUNG EINES SEGMENTS EINER KLIMAKANALANORDNUNG UND SEGMENT EINER KLIMAKANALANORDNUNG**
METHOD FOR MANUFACTURING A SEGMENT OF A CLIMATE CHANNEL ARRANGEMENT AND SEGMENT OF A CLIMATE CHANNEL ARRANGEMENT
PROCEDE DE FABRICATION D'UN SEGMENT D'UN CANAL CLIMATIQUE ET SEGMENT D'UN CANAL CLIMATIQUE

(30) Priorität: 08.03.2018 DE 102018203516
(43) Veröffentlichungstag der Anmeldung: 04.11.2020
(73) Patentinhaber: Siemens Mobility GmbH, 81739 München (DE)
(72) Erfinder: ARRAS, Burkhard, 47802 Krefeld (DE)
(86) Internationale Anmeldenummer: PCT/EP2019/054724
(87) Internationale Veröffentlichungsnummer: WO 2019/170474

(56) Entgegenhaltungen:
- WO-A1-2016/186710
- DE-B3- 10 261 081
- JP-A- H06 156 052

## Beschreibung

Die Erfindung bezieht sich auf ein Verfahren zur Herstellung eines Segments einer Klimakanalanordnung, wobei das Segment auf seiner Außenseite mit einer thermischen Isolierung versehen ist, sowie auf ein Segment einer Klimaanordnung selbst.

In Klimaanordnungen eingesetzte Klimakanäle in Fahr- und Flugzeugen werden zumindest abschnittsweise thermisch isoliert, um die Eigenschaften der beispielsweise mit Hilfe eines Klimagerätes konditionierten Luft (Temperatur, relative Feuchtigkeit) beim Transport durch den Klimakanal möglichst unverändert zu erhalten. Dies ist eine wichtige Voraussetzung für eine energieeffiziente Luftführung und eine Vermeidung von Kondensatbildung im Klimakanal.

Dabei ist es bekannt, zur Isolierung eines Klimakanals von außen ein geschlossenporiges Material einzusetzen, so dass auch eine Kondensatbildung im inneren der Isolierschicht vermieden wird. Es ist jedoch auch möglich, offenporiges Material für die Isolierung des Klimakanals einzusetzen, welches dann in einem abschließenden Schritt an seiner Oberfläche hermetisch gedichtet wird. Dies ist insbesondere an Stoßstellen von Isoliermaterialabschnitten immer erforderlich.

Ein weiterer Aspekt einer energieeffizienten und auch geräuscharmen Klimatisierung eines Fahr- oder Flugzeugs ist eine strömungsgünstige Formgebung des Klimakanals, so dass ein Transport der konditionierten Luft mit geringem Energieverlust (wofür ein Strömungswiderstand des Klimakanals ein Maß ist) und mit nur in geringem Maße auftretenden Verwirbelungen, die eine Geräuschentwicklung nach sich ziehen, von Statten geht.

Für eine Luftströmung günstig geformte Kanäle bestehen besonders an Verzweigungs- oder Vereinigungsstellen, häufig aus komplex geformten geometrischen Körpern mit unregelmäßig gekrümmten Flächen. Solche Körper lassen sich nur aufwändig, beispielsweise mit Hilfe formgebender Werkzeuge herstellen und mittels Isolationsmaterial thermisch isolieren. Aufgrund dessen wurde bisher häufig auf eine strömungsgünstige Formgebung für Klimakanäle oder auch für Segmente derselben verzichtet. Vielmehr lag der Fokus auf einer einfachen, kostengünstigen Herstellung des Klimakanals oder der Klimakanalsegmente sowie einer einfachen, kostengünstigen thermischen Isolierung durch Bekleben einer Außenfläche des Klimakanals oder Klimakanalsegments mit zugeschnittenem Isolationsmaterial aus Dämmmaterial mit niedriger Wärmeleitfähigkeit.

Bei dieser Lösung nimmt man jedoch strömungstechnische Inneffizienz, Geräuschentwicklung durch Verwirbelungen der Luft im Klimakanal sowie einen ggf. zu großen Bauraumbedarf für den Klimakanal in Kauf.

Das Dokument WO2016/186710 A1 offenbart die Herstellung eines Segments einer Klimakanalanordnung nach einem dreidimensionalen Druckverfahren. In der Patentschrift JP H06 156052 A wird das Anbringen einer porösen Isolierschicht durch Bekleben eines Teiles der Außenfläche des Klimakanalsegments beschrieben.

Ausgehend hiervon liegt der Erfindung die Aufgabe zugrunde, ein Segment eines Klimakanals derart weiterzuentwickeln, dass unter Beibehaltung einer geeigneten thermischen Isolierung eine strömungsgünstigere Formgebung für das Segment eines Klimakanals ermöglicht ist.

Diese Aufgabe wird hinsichtlich des Verfahrens gelöst durch ein Herstellungsverfahren nach Anspruch 1.

Danach ist ein Verfahren zur Herstellung eines Segments einer Klimakanalanordnung vorgesehen, wobei das Segment auf seiner Außenseite mit einer thermischen Isolierung versehen ist, mit den aufeinander folgenden Schritten:
a) Herstellung des Segments in einem dreidimensionalen Druckverfahren,
b) Herstellen von ersten Isolationsmaterialabschnitten der thermischen Isolierung in einem dreidimensionalen Druckverfahren, wobei Außenflächenbereiche des in Schritt a) hergestellten Segments von thermischer Isolierung frei gelassen bleiben,
c) Herstellen von zweiten Isolationsmaterialabschnitten der thermischen Isolierung im Bereich der in Schritt b) frei bleibenden Außenflächenbereiche des Segments durch Aufbringen von vorkonfektionierten platten- oder schlauchförmigen Isolationsmaterialstücken auf diese Außenflächenabschnitte derart, dass die vorkonfektionierten platten- oder schlauchförmigen Isolationsmaterialstücke jeweils an angrenzende, in Schritt b) hergestellte Isolationsmaterialabschnitte angrenzen.
d) Stöße zwischen den ersten und den zweiten Isolationsmaterialabschnitten gasdicht verschlossen werden.

Bei diesem Herstellungsverfahren für ein Segment einer Klimaordnung wird davon Gebrauch gemacht, dass sich mit Hilfe dreidimensionaler Druckverfahren auch komplexe Formgebungen sowohl für das Segment selbst auch für dessen thermische Isolierung verwirklichen lassen. Somit ist es bevorzugt, dass insbesondere für besonders komplex geformte Abschnitte des Segments und seiner Isolierung ein dreidimensionales Druckverfahren zum Einsatz kommt. In Außenflächenbereichen des Segments, bei denen das dreidimensionale Druckverfahren zur Formgebung nicht erforderlich ist, wird auf die bekannte Belegung der Außenfläche des Segments mit vorkonfektionierten platten- oder schlauchförmigen Isolationsmaterialstücken zurückgegriffen, so dass sich insgesamt eine kostengünstige Herstellung ergibt. Die ersten und zweiten Isolationsmaterialabschnitte ergeben eine zusammenhängende thermische Isolierung des Segments, die nicht notwendiger Weise eine gesamte Außenfläche des Segments umfassen muss. Auch können die ersten und zweiten Isolationsmaterialabschnitte bedarfsweise in ihrer Höhe variieren.

Bevorzugt werden die Schritte a) und b) in demselben Arbeitsgang des dreidimensionalen Druckverfahrens durchgeführt. In dieser Weise lassen sich aufwandsarm und zeitsparend sowohl das Segment selbst als auch die ersten Isolationsmaterialabschnitte in einem Zuge fertigen.

Die in Schritt b) hergestellten ersten Isolationsmaterialabschnitte weisen unregelmäßiger gekrümmte Oberflächen auf als die in Schritte c) hergestellten zweiten Isolationsmaterialabschnitte. Im Einzelnen kommen die in Schritt c) eingesetzten vorkonfektionierten platten- oder schlauchförmigen Isolationsmaterialstücke aufgrund ihrer geringeren Kosten vorzugsweise überall dort zum Einsatz, wo es die Beschaffenheit der Außenfläche des Segments der Klimakanalanordnung zulässt. Lediglich besonders komplex geformte Außenflächenbereiche der thermischen Isolierung werden in dem dreidimensionalen Druckverfahren hergestellt.

Vorzugsweise werden die zweiten Isolationsmaterialabschnitte auf die in Schritt b) freigelassenen Außenflächenbereiche des Segments geklebt. In dieser Weise lassen sich diese Isolationsmaterialabschnitte aufwandsarm auf das Segment aufbringen.

Vorzugsweise ist ein Anteil von wenigstens 50% der Außenfläche des Segments mit den zweiten Isolationsmaterialabschnitten belegt. Der Wert von 50% der Außenfläche des Segments ist insbesondere für kompakte 3D-Druck-Teile zu erwarten. Bei weniger kompakten Komponenten kann der Anteil auch wenigstens 75% der Außenfläche betragen.

Als Material für die zweiten Isolationsmaterialabschnitte kann geschlossenzelliges Dämmmaterial eingesetzt werden, während die ersten Isolationsmaterialabschnitte bevorzugt von Materialstrukturen mit Lufteinschlüssen und gasdichten Deckschichten gebildet sind.

Hinsichtlich eines Segments eines Klimakanals wird die o.g. Aufgabe durch ein Segment nach Anspruch 8 gelöst.

Danach ist ein Segment einer Klimakanalanordnung vorgesehen, wobei das Segment auf seiner Außenseite mit einer geschlossenen thermischen Isolierung versehen ist, wobei das Segment in einem dreidimensionalen Druckverfahren hergestellt ist, erste Isolationsmaterialabschnitte der thermischen Isolierung in einem dreidimensionalen Druckverfahren hergestellt sind, und zwar unter Freilassung von Außenflächenbereichen des Segments, zweite Isolationsmaterialabschnitte der thermischen Isolierung im Bereich der freigelassenen Außenflächenbereiche des Segments aufgebracht sind, wobei die zweiten Isolationsmaterialabschnitte von vorkonfektionierten platten- oder schlauchförmigen Isolationsmaterialstücken gebildet sind und die vorkonfektionierten platten- oder schlauchförmigen Isolationsmaterialstücke an die ersten Isolationsmaterialabschnitte angrenzen, und Stöße zwischen dem ersten und dem zweiten Isolationsmaterialabschnitten gasdicht verschlossen sind.

Der Begriff "Segment" wird in dieser Beschreibung beispielsweise für Klimakanalabschnitte, -umlenkungen, -verzweigungen, -zusammenführungen sowie für ein- oder ausströmende Teile des Klimakanals verwendet.

Bevorzugte Ausführungsformen eines solchen Segments für eine Klimakanalanordnung sind bereits oben anhand des Verfahrens erläutert, das zur Herstellung eines solchen Segmentes zum Einsatz kommen kann.

Ein Ausführungsbeispiel der Erfindung wird nachfolgend anhand der Zeichnungen noch näher erläutert. Es zeigen:

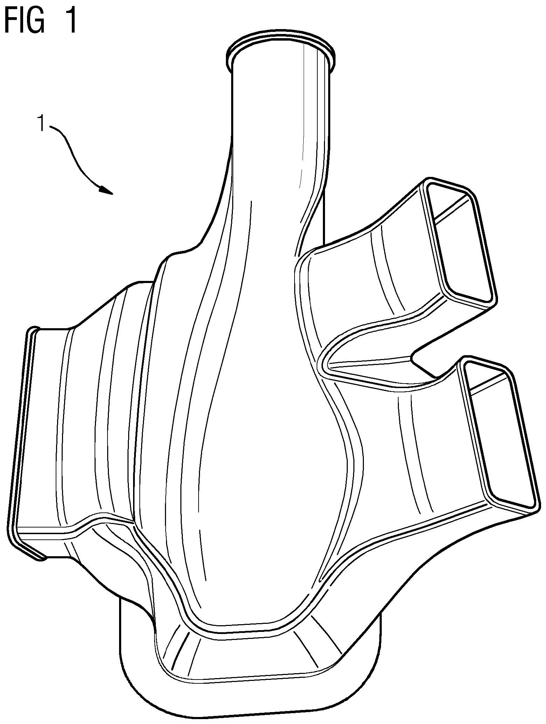

Figur 1 eine perspektivische Ansicht eines strömungstechnisch geformten Segments einer Klimakanalanordnung und

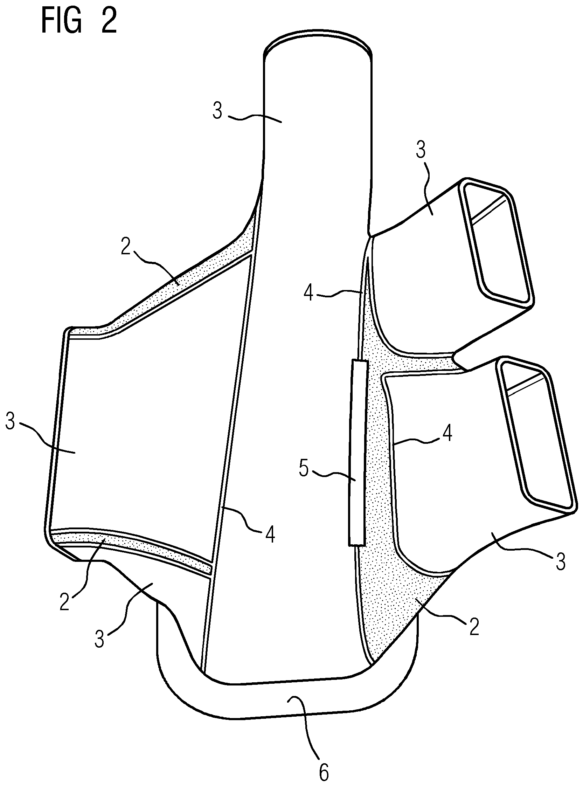

Figur 2 eine perspektivische Ansicht des Segments von Figur 1 mit zusätzlich aufgebrachter thermischer Isolierung Figur 1 zeigt ein in einem dreidimensionalen Druckverfahren hergestelltes Segment 1 einer Klimakanalanordnung. Das Segment 1 ist für eine günstige Strömungsführung (Strömungswiderstand, Verwirbelungen) von darin transportierter Luft komplex geformt und weist eine Mehrzahl an Ein- und Auslässen für konditionierte Luft auf, die von einem Klimagerät bereitgestellt wird und letztlich in einen Fahrgastinnenraum eines Fahr- oder Flugzeugs zu verbringen ist. Die allgemeine Form des Segments 1 ist dergestalt, dass es Oberflächenabschnitte mit unregelmäßigen Krümmungen, aber auch Abschnitte mit im Wesentlichen ungeändertem Radius und flache Abschnitte aufweist. **Das Segment (ohne Isolierung) ist bevorzugt aus Kunststoff hergestellt.**

Die Außen-/Mantelfläche des Segments 1 von Figur 1 ist nunmehr mit einer thermischen Isolierung zu versehen. Wie aus Figur 2 hervorgeht, ist diese thermische Isolierung aus ersten Isolationsmaterialabschnitten 2 und zweiten Isolationsmaterialabschnitten 3 zusammengesetzt. Dabei sind die ersten Isolationsmaterialabschnitte 2 ebenfalls in einem dreidimensionalen Druckverfahren hergestellt, und zwar in einem Arbeitsgang mit der Herstellung des Segments 1. Für die ersten Isolationsmaterialabschnitte 2 werden Materialstrukturen mit Lufteinschlüssen und gasdichten Deckschichten eingesetzt.

Für die zweiten Isolationsmaterialabschnitte wird geschlossenzelliges Dämmmaterial verwendet, das in vorkonfektionierter platten- oder schlauchförmiger Ausprägung vorliegt. Die zweiten Isolationsmaterialabschnitte 3 sind auf in dem vorausgehenden dreidimensionalen Druckverfahren freigelassene Außenflächenbereiche des Segments 1 geklebt und grenzen an die ersten Isolationsmaterialabschnitte 2 an. Dabei ergeben sich Stöße zwischen den ersten Isolationsmaterialabschnitten 2 und jeweils unmittelbar angrenzenden zweiten Isolationsmaterialabschnitten 3. Ein beispielhafter Stoß 4 ist in Figur 2 dargestellt. Insgesamt liegen jedoch mehrere solcher Stöße zwischen den ersten und den zweiten Isolationsmaterialabschnitten vor. Ersichtlich ist der aus ersten Isolationsmaterialabschnitte 2 aufgebaute Anteil der thermischen Isolierung wesentlich niedriger als der auf die zweiten Isolationsmaterialabschnitte 3 entfallende Anteil (>50%).

Zur Vermeidung von Kondensation sind sämtliche Stöße zwischen den ersten Isolationsmaterialabschnitten 2 und den zweiten Isolationsmaterialabschnitten 3 gasdicht zu verschließen. Zu diesem Zweck sind sämtliche Stöße in der Art des veranschaulichten Stoßes 4 mit einer selbstklebenden Abdichtung wie der beispielhaft in Figur 2 gezeigten Abdichtung 5 versehen. Insgesamt ergibt sich wenigstens für einen zusammenhängenden Außenflächenabschnitt des Segments 1 eine zusammengesetzte, jedoch vollständige thermische Isolierung, die aus den ersten Isolationsmaterialabschnitten 2 und den zweiten Isolationsmaterialabschnitten 3 zusammengesetzt ist.

Im vorliegenden Ausführungsbeispiel bleibt ein flanschartiger Randbereich 6 der Außenfläche des Segments 1 von thermischem Isolationsmaterial frei.

## Patentansprüche

1. Verfahren zur Herstellung eines Segments (1) einer Klimakanalanordnung, wobei das Segment (1) auf seiner Außenseite mit einer thermischen Isolierung versehen ist, mit den aufeinander folgenden Schritten:
a) Herstellung des Segments (1) in einem dreidimensionalen Druckverfahren,
b) Herstellen von ersten Isolationsmaterialabschnitten (2) der thermischen Isolierung in einem dreidimensionalen Druckverfahren, wobei Außenflächenbereiche des in Schritt a) hergestellten Segments (1) von thermischer Isolierung frei gelassen bleiben,
c) Herstellen von zweiten Isolationsmaterialabschnitten (3) der thermischen Isolierung im Bereich der in Schritt b) frei bleibenden Außenflächenbereiche des Segments (1) durch Aufbringen von vorkonfektionierten platten- oder schlauchförmigen Isolationsmaterialstücken auf diese Außenflächenabschnitte derart, dass die vorkonfektionierten platten- oder schlauchförmigen Isolationsmaterialstücke jeweils an angrenzende, in Schritt b) hergestellte Isolationsmaterialabschnitte (2) angrenzen.
d) Stöße (4) zwischen den ersten und den zweiten Isolationsmaterialabschnitten gasdicht verschlossen werden.

2. Verfahren nach Anspruch 1,
bei dem
die Schritte a) und b) in demselben Arbeitsgang des dreidimensionalen Druckverfahrens durchgeführt werden.

3. Verfahren nach Anspruch 1 oder 2,
bei dem
die in Schritt b) hergestellten ersten Isolationsmaterialabschnitte (2) unregelmäßiger gekrümmte Flächen aufweisen als die in Schritt c) hergestellten zweiten Isolationsmaterialabschnitte (3).

4. Verfahren nach einem der Ansprüche 1 bis 3,
bei dem
in Schritt c) die zweiten Isolationsmaterialabschnitte (3) auf die in Schritt b) frei gelassenen Außenflächenbereiche des Segments (1) geklebt werden.

5. Verfahren nach einem der Ansprüche 1 bis 4,
bei dem ein Anteil von wenigstens 50% der Außenfläche des Segments (1) mit den zweiten Isolationsmaterialabschnitten (3) belegt ist.

6. Verfahren nach einem der Ansprüche 1 bis 5,
bei dem
für die zweiten Isolationsmaterialabschnitte (3) geschlossenzelliges Dämmmaterial eingesetzt wird.

7. Verfahren nach einem der Ansprüche 1 bis 6,
bei dem
für die ersten Isolationsmaterialabschnitte (2) Materialstrukturen mit Lufteinschlüssen und gasdichten Deckschichten eingesetzt werden.

8. Segment einer Klimakanalanordnung, wobei das Segment (1) auf seiner Außenseite mit einer geschlossenen thermischen Isolierung versehen ist,
**dadurch gekennzeichnet, dass**
das Segment (1) in einem dreidimensionalen Druckverfahren hergestellt ist, erste Isolationsmaterialabschnitte (2) der thermischen Isolierung in einem dreidimensionalen Druckverfahren hergestellt sind, und zwar unter Freilassung von Außenflächenbereichen des Segments, zweite Isolationsmaterialabschnitte (3) der thermischen Isolierung im Bereich der freigelassenen Außenflächenbereiche des Segments (1) aufgebracht sind, wobei die zweiten Isolationsmaterialabschnitte (3) von vorkonfektionierten platten- oder schlauchförmigen Isolationsmaterialstücken gebildet sind und die vorkonfektionierten platten- oder schlauchförmigen Isolationsmaterialstücke an die ersten Isolationsmaterialabschnitte (2) angrenzen, und Stöße (4) zwischen den ersten (2) und den zweiten Isolationsmaterialabschnitten (3) gasdicht verschlossen sind.

9. Segment nach Anspruch 8,
**dadurch gekennzeichnet, dass**
die ersten Isolationsmaterialabschnitte (2) unregelmäßiger gekrümmter Flächen aufweisen als die zweiten Isolationsmaterialabschnitte (3).

10. Segment nach einem der Ansprüche 8 oder 9,
**dadurch gekennzeichnet, dass**
die zweiten Isolationsmaterialabschnitte (3) auf die freigelassenen Außenflächenbereiche des Segments (1) geklebt sind.

11. Segment nach einem der Ansprüche 8 bis 10,
**dadurch gekennzeichnet, dass**
ein Anteil von wenigstens 50% der Außenfläche des Segments (1) mit den zweiten Isolationsmaterialabschnitten (3) belegt ist.

12. Segment nach einem der Ansprüche 8 bis 11,
**dadurch gekennzeichnet, dass**
die zweiten Isolationsmaterialabschnitte (3) aus geschlossenzelligem Dämmmaterial gebildet sind.

13. Segment nach einem der Ansprüche 8 bis 12,
**dadurch gekennzeichnet, dass**
die ersten Isolationsmaterialabschnitte (2) von Materialstrukturen mit Lufteinschlüssen und gasdichten Deckschichten gebildet sind.

## Claims

1. Method for producing a segment (1) of an air-conditioning channel arrangement, wherein the segment (1) is provided on its outer side with thermal insulation, comprising the successive steps of:
a) producing the segment (1) in a three-dimensional printing process,
b) producing first insulation material sections (2) of the thermal insulation in a three-dimensional printing process, wherein outer surface regions of the segment (1) produced in step a) remain left free of thermal insulation,
c) producing second insulation material sections (3) of the thermal insulation in the region of those outer surface regions of the segment (1) which remain free in step b), by applying prefabricated plate-like or tubular insulation material pieces to said outer surface sections in such a way that the prefabricated plate-like or tubular insulation material pieces each adjoin adjoining insulation material sections (2) produced in step b),
d) closing off joints (4) between the first and second insulation material sections in a gas-tight manner.

2. Method according to Claim 1,
in which
the steps a) and b) are carried out in the same operation of the three-dimensional printing process.

3. Method according to Claim 1 or 2,
in which
the surfaces of the first insulation material sections (2) produced in step b) are more irregularly curved than the surfaces of the second insulation material sections (3) produced in step c).

4. Method according to one of Claims 1 to 3,
in which,
in step c), the second insulation material sections (3) are adhesively bonded to those outer surface regions of the segment (1) left free in step b).

5. Method according to one of Claims 1 to 4,
in which a proportion of at least 50% of the outer surface of the segment (1) is occupied by the second insulation material sections (3).

6. Method according to one of Claims 1 to 5,
in which
closed-cell damping material is used for the second insulation material sections (3).

7. Method according to one of Claims 1 to 6,
in which
material structures with air pockets and gas-tight cover layers are used for the first insulation material sections (2).

8. Segment of an air-conditioning channel arrangement, wherein the segment (1) is provided on its outer side with closed thermal insulation,
**characterized in that**
the segment (1) is produced in a three-dimensional printing process, first insulation material sections (2) of the thermal insulation are produced in a three-dimensional printing process, specifically with outer surface regions of the segment being left free, second insulation material sections (3) of the thermal insulation are applied in the region of those outer surface regions of the segment (1) left free, wherein the second insulation material sections (3) are formed by prefabricated plate-like or tubular insulation material pieces, and the prefabricated plate-like or tubular insulation material pieces adjoin the first insulation material sections (2), and joints (4) between the first (2) and second insulation material sections (3) are closed off in a gas-tight manner.

9. Segment according to Claim 8,
**characterized in that**
the surfaces of the first insulation material sections (2) are more irregularly curved than the surfaces of the second insulation material sections (3).

10. Segment according to either of Claims 8 or 9,
**characterized in that**
the second insulation material sections (3) are adhesively bonded to those outer surface regions of the segment (1) left free.

11. Segment according to one of Claims 8 to 10,
**characterized in that**
a proportion of at least 50% of the outer surface of the segment (1) is occupied by the second insulation material sections (3).

12. Segment according to one of Claims 8 to 11,
**characterized in that**
the second insulation material sections (3) are formed from closed-cell damping material.

13. Segment according to one of Claims 8 to 12,
**characterized in that**
the first insulation material sections (2) are formed by material structures with air pockets and gas-tight cover layers.

## Revendications

1. Procédé de fabrication d'un segment (1) d'une canalisation de conditionnement d'air, le segment (1) étant pourvu sur son côté extérieur d'une isolation thermique, comprenant les stades successifs :
a) la fabrication du segment (1) dans un procédé d'impression en trois dimensions,
b) la fabrication de premières parties (2) de matériau isolant de l'isolant thermique dans un procédé d'impression en trois dimensions, des parties de surface extérieure du segment (1) fabriqué au stade a) restant laissées libres de l'isolant thermique,
c) la fabrication de deuxièmes parties (3) de matériau isolant de l'isolant thermique dans la partie des parties de surface extérieure restant libres au stade b) du segment (1) par dépôt de pièces de matériau isolant préconfectionnées en forme de plaque ou de tuyau souple sur ses parties de surface extérieure, de manière à ce que les pièces de matériau isolant préconfectionnées et sous forme de plaque ou de tuyau souple soient voisines chacune de parties (2) de matériau isolant voisines fabriquées au stade b),
d) on ferme d'une manière étanche au gaz des joints (4) entre les premières et les deuxièmes parties de matériau isolant.

2. Procédé suivant la revendication 1,
dans lequel
on effectue les stades a) et b) dans la même passe opératoire du procédé d'impression en trois dimensions.

3. Procédé suivant la revendication 1 ou 2,
dans lequel
les premières parties (2) de matériau isolant fabriquées au stade b) ont des surfaces incurvées plus irrégulièrement que les deuxièmes parties (3) de matériau isolant fabriquées au stade c).

4. Procédé suivant l'une des revendications 1 à 3,
dans lequel
au stade c) on colle les deuxièmes parties (3) de matériau isolant sur les parties de surface extérieure laissées libres au stade b) du segment (1).

5. Procédé suivant l'une des revendications 1 à 4,
dans lequel
une proportion d'au moins 50 % de la surface extérieure du segment (1) est occupée par les deuxièmes parties (3) de matériau isolant.

6. Procédé suivant l'une des revendications 1 à 5,
dans lequel
on utilise pour les deuxièmes parties (3) de matériau isolant du matériau insonorisant à cellules fermées.

7. Procédé suivant l'une des revendications 1 à 6,
dans lequel
on utilise pour les premières parties (2) de matériau isolant des structures de matériau ayant des inclusions d'air et des couches de finition étanches au gaz.

8. Segment d'une canalisation de conditionnement d'air, dans lequel le segment (1) est pourvu sur son côté extérieur d'une isolation thermique fermée,
**caractérisé en ce que**
le segment (1) est fabriqué dans un procédé d'impression en trois dimensions des premières parties (2) de matériau isolant de l'isolation thermique sont fabriquées dans un procédé d'impression en trois dimensions et cela en laissant libres des parties de surface extérieure du segment, des deuxièmes parties (3) de matériau isolant de l'isolation thermique sont déposées dans la région des parties de surface extérieure laissées libres du segment (1), dans lequel les deuxièmes parties (3) du matériau isolant sont constituées de pièces de matériau isolant préconfectionnées sous forme de plaque ou sous forme de tuyau souple et les pièces de matériau isolant préconfectionnée sous forme de plaque ou de tuyau souple sont voisines des premières parties (2) de matériau isolant et des joints (4) entre les premières (2) et les deuxièmes parties (3) de matériau isolant sont fermées d'une manière étanche au gaz.

9. Segment suivant la revendication 8,
**caractérisé en ce que**
les premières parties (2) de matériau isolant ont des surfaces incurvées plus irrégulières que les deuxièmes parties (3) de matériau isolant.

10. Segment suivant l'une des revendications 8 ou 9,
**caractérisé en ce que**
les deuxièmes parties (3) de matériau isolant sont collées sur les parties de surface extérieure laissées libres du segment (1).

11. Segment suivant l'une des revendications 8 à 10,
**caractérisé en ce que**
une proportion d'au moins 50 % de la surface extérieure du segment (1) est occupée par les deuxièmes parties (3) de matériau isolant.

12. Segment suivant l'une des revendications 8 à 11,
**caractérisé en ce que**
les deuxièmes parties (3) de matériau isolant sont en un matériau insonorisant à cellules fermées.

13. Segment suivant l'une des revendications 8 à 12,
**caractérisé en ce que**
les premières parties (2) de matériau isolant sont formées de structures de matériau ayant des inclusions d'air et des couches de finition étanches au gaz.
